# EUROPÄISCHE PATENTANMELDUNG

(11) **EP 0 858 828 A1**
(43) Veröffentlichungstag der Anmeldung: **19.08.1998**
(21) Anmeldenummer: 98102299.9
(22) Anmeldetag: 10.02.1998
(51) Int. Cl.: B01F 3/08, B01F 11/02

(54) **Verfahren und Vorrichtung zur Sprühverteilung mittels Ultraschall**

(30) Priorität: 12.02.1997 DE 19705364
(71) Anmelder: LEWA Herbert Ott GmbH + Co., 71229 Leonberg (DE)
(72) Erfinder: Johl, Hans-Joachim, Dr.-Ing., 71701 Schwieberdingen (DE); Konz, Jürgen, 71287 Weissach (DE)
(74) Vertreter: Zeitler, Giselher, Dipl.-Ing.

(57) **Zusammenfassung**

Bei einem Verfahren zum Sprühverteilen bzw. dispersen Einbringen eines Zumischmediums, insbesondere einer Dosierflüssigkeit, in eine zu behandelnde Hauptflüssigkeit, beispielsweise zum Einbringen einer Kaltentkeimungsflüssigkeit in ein Getränk, wird derart vorgegangen, daß die Dosierflüssigkeit (5) beim Einbringen in die Hauptflüssigkeit (1) dort mittels Schwingungsenergie hoher Frequenz verteilt und in kleinste Tröpfchen mit hoher Gesamtoberfläche zerlegt wird. Die zur Durchführung dieses Verfahrens vorgesehene Vorrichtung ist derart ausgebildet, daß in der zu behandelnden Hauptflüssigkeit (1) wenigstens die Stirnfläche (10) eines sondenförmigen Hochfrequenzschwingungserregers (6, 9) angeordnet ist, zu der die Dosierflüssigkeit (5) strömt und dort mittels der eingeleiteten Schallwellen in der Hauptflüssigkeit (1) zerstäubt wird.

## Beschreibung

Die Erfindung betrifft ein Verfahren zum Sprühverteilen bzw. dispersen Einbringen eines Zumischmediums, insbesondere einer Dosierflüssigkeit, in eine zu behandelnde Hauptflüssigkeit gemäß dem Oberbegriff des Anspruchs 1 sowie eine zur Durchführung dieses Verfahrens vorgesehene Vorrichtung gemäß dem Oberbegriff des Anspruchs 12.

Ein derartiges Verfahren bzw. eine derartige Vorrichtung gelangen überall da zur Anwendung, wo sich das in eine zu behandelnde Hauptflüssigkeit einzubringende Zumischmedium mit dieser Hauptflüssigkeit nicht mischt und daher in der Hauptflüssigkeit möglichst fein verteilt werden muß.

Dies ist beispielsweise bei der Kaltentkeimung von Getränken der Fall, beim Einbringen eines Fällungsmittels in eine Flüssigkeit usw.

Bei derartigen Verfahren, insbesondere bei der Kaltsterilisation von Getranken, wie nichtalkoholischen aromatisierten Getränken, entalkoholisiertem Wein, flüssigen Teekonzentraten usw., wird bisher derart vorgegangen, daß ein sich mit der Hauptflüssigkeit nicht mischendes, jedoch leicht und schnell zerfallendes Kaltentkeimungsmittel, insbesondere Dimethyldicarbonat (DMDC), in die Hauptflüssigkeit mittels einer Sprühdüse eingebracht wird. Dieses Zumischmedium (DMDC) hat sich für die Kaltsterilisation als vorteilhaftes Verfahren in der Getränkeindustrie bewahrt und wirkt bereits bei einer Dosiermenge von 6 bis 20 ml/hl Getränk gegen Hefen, Pilze und Bakterien. Nach seiner Einbringung in die Hauptflüssigkeit zerfällt DMDC schnell in Kohlendioxid und Alkohol, d.h. in solche Bestandteile, die natürliche Inhaltsstoffe zahlreicher Getränke sind.

Die unter Druck erfolgende Sprühverteilung eines solchen Zumischmediums in der Hauptflüssigkeit mittels Sprühdüsen hat zwar den erwünschten Effekt einer relativ feinen Verteilung des Zumischmediums in der Hauptflüssigkeit. Jedoch läßt die gleichmäßige Verteilung des Zumischmediums in der Hauptflüssigkeit, das sich ja mit dieser Hauptflüssigkeit nicht mischt und deshalb in dieser dispergiert werden muß, noch zu wünschen übrig. Außerdem tritt an der Sprühdüse ein gewisser mechanischer Verschleiß auf, so daß diese nach relativ kurzer Zeit ausgetauscht werden muß.

Schließlich ist auch der Energieaufwand für das unter Druck der Sprühdüse zuzuführende Zumischmedium hoch, da beispielsweise ein Zuführdruck von 25 bar erzeugt und aufrechterhalten werden muß.

Der Erfindung liegt daher die Aufgabe zugrunde, zur Beseitigung der geschilderten Nachteile ein Verfahren sowie eine Vorrichtung zu schaffen, mittels denen das Zumischmedium in der Hauptflüssigkeit möglichst fein und gleichmäßig verteilt wird, wobei gleichzeitig der Verschleiß der Verteileinrichtung gering und der Energieaufwand verringert sein soll.

Diese Aufgabe wird mit dem Verfahren gemäß der Erfindung durch die Merkmale des Anspruchs 1 und mit der Vorrichtung gemaß der Erfindung durch die Merkmale des Anspruchs 12 gelöst. Vorteilhafte Ausgestaltungen hiervon sind in den jeweiligen Unteransprüchen angegeben.

Beim erfindungsgemäßen Verfahren wird derart vorgegangen, daß das Zumischmedium, insbesondere die Dosierflüssigkeit, beim Einbringen in die Hauptflüssigkeit dort mittels Schwingungsenergie hoher Frequenz verteilt und in kleinste Tröpfchen mit hoher Gesamtoberfläche zerlegt wird.

Gemäß einer vorteilhaften Ausgestaltung des erfindungsgemäßen Verfahrens wird Ultraschall angewendet, um die Schwingungsenergie hoher Frequenz zu erzeugen. Hierbei schwingt der Ultraschall vorzugsweise mit einer Frequenz zwischen 20 bis 80 kHz.

Es liegt im Rahmen der Erfindung, daß als Ultraschall ein solcher zur Anwendung gelangt, der eine verstellbare Amplitude aufweist.

Der Ultraschall wird zweckmäßigerweise mittels eines Ultraschallerregers erzeugt, und zwar entweder kontinuierlich oder intermittierend.

Die Dosierflüssigkeit kann gleichfalls kontinuierlich oder intermittierend der Hauptflüssigkeit zugeleitet werden. Dies kann entweder mittels einer Zufuhrleitung erfolgen, die zumindest an ihrer Austrittsstelle im Ultraschallbereich schwingt, oder es kann derart vorgegangen werden, daß die Dosierflüssigkeit beim Einleiten in die Hauptflüssigkeit auf eine im Ultraschallbereich schwingende Stirnfläche eines Hochfrequenzschwingungserregers aufgebracht wird.

In jedem Fall ist durch das erfindungsgemäße Verfahren der entscheidende Vorteil erreicht, daß die Dosierflüssigkeit in der Hauptflüssigkeit außerordentlich gleichmäßig verteilt und in sehr zahlreiche kleinste Tröpfchen mit hoher Gesamtoberflache zerlegt wird, so daß eine höchstmögliche Wirksamkeit der in die Hauptflüssigkeit eingebrachten Dosierflüssigkeit erzielt wird. Gleichzeitig ist der Verschleiß des als Verteileinrichtung zur Anwendung gelangenden Ultraschallerregers äußerst gering, wobei auch der Energieaufwand zum Betreiben eines solchen Ultraschallerregers im Vergleich zur Anwendung einer Sprühdüse minimal ist.

Das Verfahren und die Vorrichtung gemäß der Erfindung lassen sich mit besonderem Vorteil zum Herstellen eines homogenen Gemisches zwischen einer Zumischflüssigkeit und einer Hauptflüssigkeit anwenden, wobei beide Flüssigkeiten neben der flüssigen Phase auch eine Gasphase und/oder eine feste Phase enthalten können. Die Zumischflüssigkeit strömt diskontinuierlich oder kontinuierlich zu einer Oberfläche, an der die Zumischflüssigkeit aufgrund der eingeleiteten Schallwellen, die sich vorzugsweise im Ultraschallbereich bewegen, in der Hauptflüssigkeit zerstäubt und dort dispergiert wird. An der erwähnten Oberfläche, an der das Zumischfluid einen Ausströmquerschnitt verläßt, und der umgebenden Hauptflüssigkeit, herrschen wechselnde hohe Druckunterschiede. Diese führen dazu, daß die Zumischflüssigkeit äußerst fein verteilt, d.h. vernebelt wird. Dieser Effekt beruht auf der auftretenden Kavitation. Der Austrittsort der Zumischflüssigkeit ist beispielsweise die Stirnfläche eines Stabes, d.h. eines sondenförmigen Ultraschallerregers (Sonotrode), der in die Hauptflüssigkeit hineinragt. Diese kann ruhend sein bzw. diskontinuierlich oder kontinuierlich strömen.

Der Austrittsquerschnitt der Zumischflüssigkeit kann offen oder verschließbar ausgeführt sein. Die durch die Schallenergie fein zerstäubte Zumischflüssigkeit wird in der Hauptflüssigkeit dispergiert. Dadurch können auch schwerlösliche oder schwermischbare Fluide in der Hauptflüssigkeit homogen verteilt werden. Wird das zu verteilende Fluid nicht kontinuierlich zum Austrittsquerschnitt gefördert, sondern intermittierend durch eine Dosierpumpe dorthin geleitet, wird die vernebelte Zumischflüssigkeit über Einbauten konstruktiv so geleitet, daß eine ideale Verteilung in der ruhenden oder strömenden Hauptflüssigkeit erreicht wird. Sofern es sich um eine strömende Hauptflüssigkeit handelt, wird durch geeignete konstruktive Maßnahmen eine Turbulenzerhöhung erzielt, um dadurch für eine ausreichende axiale und radiale Verteilung der Zumischflüssigkeit zu sorgen.

Der erfindungsgemäß verwendete Ultraschallerreger, der zum Zerstäuben bzw. Dispergieren der Zumischflüssigkeit in der Hauptflüssigkeit zur Anwendung gelangt, ist ein im Handel erhältlicher Ultraschallprozessor, der mit Frequenzen zwischen 20 und 80 kHz arbeitet und bei einer Leistungsaufnahme von 12 bis 1000 W einen Wirkungsgrad von bis zu 90 % erreicht.

Bei einem derartigen Ultraschallerreger, bei dem erfindungsgemäß die Feinstverteilung einer nicht löslichen Flüssigkeit in einer Hauptflüssigkeit mittels Ultraschall erfolgt, ist der Ultraschallgeber als Koppelschwinger mit Amplitudentransformator ausgebildet. Als elektroakustischer Wandler gelangt ein Verbundschwinger zur Anwendung. Dieser stellt einen Zylinder dar, an dessen Stirnflächen in axialer Richtung Ultraschallschwingungen abgestrahlt werden. An einer der beiden Kreisflächen befindet sich der fest verkoppelte Amplitudentransformator. Dieser bewirkt, daß durch eine Verkleinerung der kreisförmigen Abstrahlfläche eine entsprechende Vergrößerung der Schwingungsamplitude auftritt. Es entsteht an dieser Stelle ein hochintensives Ultraschallfeld.

Die Zumischflüssigkeit bzw. die zu dispergierende Flüssigkeit wird der Hauptflüssigkeit über eine zentrale Axialbohrung im Innern des sondenförmigen Ultraschallerregers zugeführt, wobei die Zumischflüssigkeit an der Stirnfläche der Sonde in die Hauptflüssigkeit austritt. Die Zumischflüssigkeit wird der Axialbohrung über eine radiale Bohrung zugeführt, die sich an einem Schwingungsknoten des Ultraschallerregers befindet.

Vor der Stirnfläche des Ultraschallschwingers entsteht in der Flüssigkeit abwechselnd eine Überdruckphase und eine Unterdruckphase, je nachdem, ob sich der Schwinger ausdehnt oder zusammenzieht.

Während der Phase des Zusammenziehens, die gleichbedeutend mit der Unterdruckphase ist, entstehen in der Flüssigkeit infolge ihrer begrenzten Zugfähigkeit unzählige kleine Hohlräume. Diese stürzen in der folgenden Ausdehnungsphase des Schwingers, die gleichbedeutend mit der Überdruckphase ist, zusammen, d.h. sie implodieren. Dieser Vorgang ist als Kavitation bekannt.

Um die sich bildenden Kavitationsblasen herum entstehen durch das knallartige Implodieren hohe örtliche Drücke (bis zu 10.000 bar) und starke Turbulenzen in der Flüssigkeit. Diese Erscheinungen können als die wesentlichen Kriterien angesehen werden, die zur erwünschten Feinstverteilung der beiden Flüssigkeitsphasen in der Hauptflüssigkeit führen.

Die Erfindung wird im folgenden anhand der Zeichnung näher erläutert. Es zeigen:
- Fig. 1: schematisch im Schnitt eine zur Durchführung des erfindungsgemäßen Verfahrens vorgesehene Vorrichtung mit einem sondenförmigen Ultraschallerreger (Sonotrode), bei dem die Zufuhr der Zumischflüssigkeit zentral durch die Sonde hindurch erfolgt, und
- Fig. 2: eine abgewandelte Ausführungsform mit dezentraler Flüssigkeitseinspeisung.

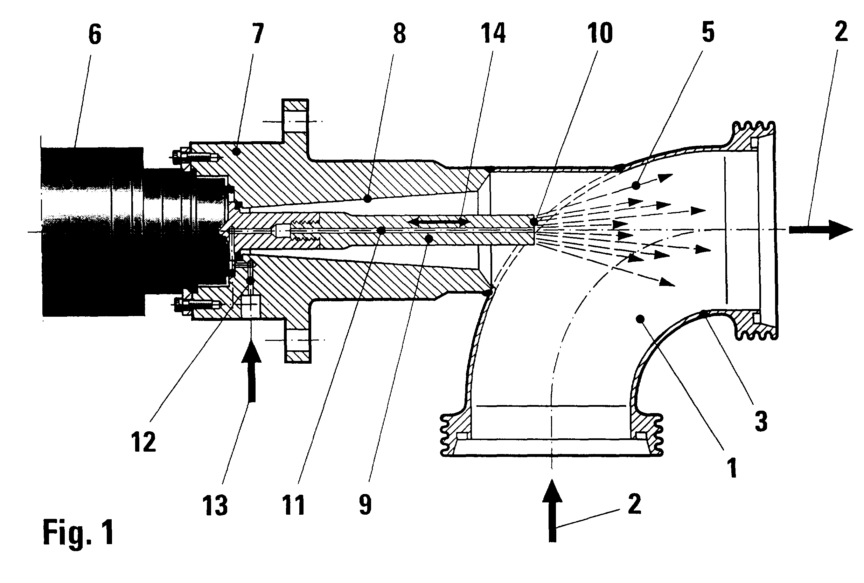

Wie aus Fig. 1 der Zeichnung ersichtlich, strömt eine zu behandelnde Hauptflüssigkeit 1 - im dargestellten Ausführungsbeispiel ein durch Kaltentkeimung zu sterilisierendes Getränk - in Richtung der Pfeile 2 durch eine Rohrleitung 3. Diese bildet an der gezeigten Stelle einen Rohrkrümmer, und zwar derart, daß die Hauptflüssigkeit 1 um etwa 90° in ihrer Strömungsrichtung 2 umgelenkt wird.

In die zu behandelnde Hauptflüssigkeit 1 soll ein Zumischmedium 5 eingebracht werden, und zwar in Form eines äußerst fein verteilten Sprühnebels, der kleinste Tröpfchen mit hoher Gesamtoberfläche aufweist. Bei diesem Zumischmedium 5 handelt es sich im dargestellten Ausführungsbeispiel um ein flüssiges Kaltentkeimungsmittel in Form von Dimethyldicarbonat (DMDC), das in kleinsten Mengen im Strom der Hauptflüssigkeit 1 homogen verteilt werden muß und somit als Dosierflüssigkeit in die Hauptflüssigkeit 1 eingeleitet werden soll.

Zu diesem Zweck wird die Dosierflüssigkeit 5 beim Einbringen in die Hauptflüssigkeit 1 mittels Schwingungsenergie hoher Frequenz verteilt und in die erwünschten kleinsten Tröpfchen mit hoher Gesamtoberfläche zerlegt. Als Schwingungsenergie hoher Frequenz gelangt Ultraschall zur Anwendung, der mit einer Frequenz zwischen 20 bis 80 kHz schwingt.

Dieser Ultraschall wird mittels eines handelsüblichen Ultraschallerregers 6 erzeugt, an dessen vorderem Ende ein Aufnahmeflansch 7 befestigt ist. Dieser ist in der aus Fig. 1 ersichtlichen Weise hülsenförmig bzw. zylinderförmig mit konisch sich zu dessen vorderem Ende hin erweiternder Innenwand 8 ausgebildet und an seinem vorderen Ende am Rohrleitungskrümmer 3 bzw. an den Rändern einer entsprechenden Öffnung hiervon angeschweißt, und zwar an einer solchen Stelle, daß - in der Darstellung gemäß Fig. 1 - die horizontale Längsmittelachse des Ultraschallerregers 6 mit der horizontalen Längsmittelachse des wegführenden Teils der Rohrleitung 3 fluchtet.

Am vorderen Ende des Ultraschallerregers 6 ist mittig der eigentliche, sondenförmig ausgebildete Hochfrequenzschwingungserreger in Form einer Sonotrode 9 befestigt, der mit seiner vorderen im Ultraschallbereich schwingenden Stirnfläche 10 in den Strom der Hauptflüssigkeit 1 ragt. Die Sonotrode 9 weist eine mittige Axialbohrung 11 auf, die an ihrer an der Stirnfläche 10 der Sonotrode 9 liegenden Austrittsstelle in die Hauptflüssigkeit 1 ausmündet und an ihrer Eintrittsstelle mit einer radialen Bohrung 12 zur in Richtung des Pfeils 13 erfolgenden Zuleitung von Dosierflüssigkeit 5 in die Hauptflüssigkeit 1 in Verbindung steht.

Aufgrund der in Richtung der Pfeile 14 im Ultraschallbereich hin- und herschwingenden Sonotrode 9 einschl. deren Stirnfläche 10 wird die dort austretende Dosierflüssigkeit 5 zu feinsten Tröpfchen vernebelt und in der Hauptflüssigkeit 1 in der erwünschten Weise gleichmäßig dispergiert.

Der Aufnahmeflansch 7 weist mit seiner konisch sich erweiternden Innenwand 8 eine hygienegerechte Konstruktion auf und erfüllt damit, auch aufgrund seiner sonstigen Ausführung und Anordnung, wie geringe Oberflächenrauhigkeit des Materials, selbstentleerende Eigenschaft, leichte Zugänglichkeit für automatische Reinigung und Desinfektion, genannt "Cleaning In Place" (CIP) und "Sterilisation In Place" (SIP), die besonderen Anforderungen der Lebensmittelindustrie.

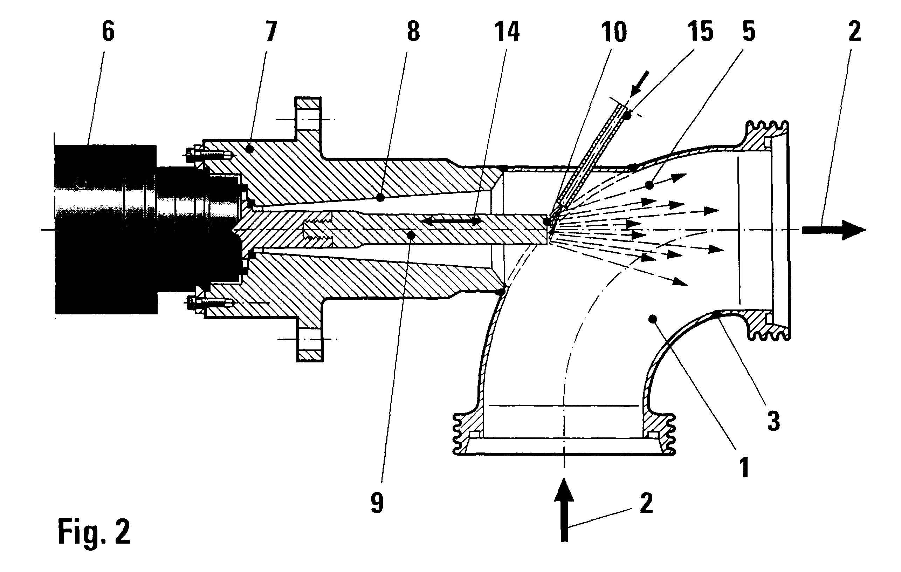

Bei der abgewandelten Ausführungsform gemaß Fig. 2 weist die Sonotrode 9 des Ultraschallerregers 6 zur Zuleitung der zuzumischenden Dosierflüssigkeit 5 keine mittige Axialbohrung auf. Stattdessen strömt die Dosierflüssigkeit 5 der Hauptflüssigkeit 1 über eine gesonderte Zufuhrleitung 15 zu, welche die Wand des am Rohrleitungskrümmer 3 angeschweißten Aufnahmeflansches 7 nach innen durchsetzt und derart auf die im Ultraschallbereich schwingende Stirnfläche 10 der Sonotrode 9 bzw. des Ultraschallerregers 6 gerichtet ist, daß die zugeleitete Dosierflüssigkeit 5 gleichfalls in kleinste Tröpfchen mit hoher Gesamtoberfläche zerlegt und in Form eines gleichmäßigen Sprühnebels in der Hauptflüssigkeit 1 verteilt wird. Im Gegensatz zur zuvor beschriebenen Ausführungsform handelt es sich hierbei somit um eine dezentrale Einspeisung der Dosierflüssigkeit 5 in die Hauptflüssigkeit 1.

Hinsichtlich vorstehend im einzelnen nicht näher erläuterter Merkmale der Erfindung wird im übrigen ausdrücklich auf die Zeichnung sowie die Patentansprüche verwiesen.

## Patentansprüche

1. Verfahren zum Sprühverteilen bzw. dispersen Einbringen eines Zumischmediums, insbesondere einer Dosierflüssigkeit, in eine zu behandelnde Hauptflüssigkeit, beispielsweise zum Einbringen einer Kaltentkeimungsflüssigkeit in ein Getränk,
**dadurch gekennzeichnet,**
daß die Dosierflüssigkeit (5) beim Einbringen in die Hauptflüssigkeit (1) dort mittels Schwingungsenergie hoher Frequenz verteilt und in kleinste Tröpfchen mit hoher Gesamtoberfläche zerlegt wird.

2. Verfahren nach Anspruch 1, dadurch gekennzeichnet, daß als Schwingungsenergie hoher Frequenz Ultraschall verwendet wird.

3. Verfahren nach Anspruch 2, dadurch gekennzeichnet, daß der Ultraschall mit einer Frequenz von 20 bis 80 kHz schwingt.

4. Verfahren nach Anspruch 2 oder 3, dadurch gekennzeichnet, daß als Ultraschall ein solcher mit verstellbarer Amplitude verwendet wird.

5. Verfahren nach einem der Ansprüche 2 bis 4, dadurch gekennzeichnet, daß der Ultraschall mittels eines Ultraschallerregers (6, 9) erzeugt wird.

6. Verfahren nach einem der Ansprüche 2 bis 5, dadurch gekennzeichnet, daß der Ultraschall kontinuierlich erzeugt wird.

7. Verfahren nach einem der Ansprüche 2 bis 5, dadurch gekennzeichnet, daß der Ultraschall intermittierend erzeugt wird.

8. Verfahren nach einem der vorhergehenden Ansprüche, dadurch gekennzeichnet, daß die Dosierflüssigkeit (5) kontinuierlich zugeleitet wird.

9. Verfahren nach einem der Ansprüche 1 bis 7, dadurch gekennzeichnet, daß die Dosierflüssigkeit (5) intermittierend zugeleitet wird.

10. Verfahren nach einem der vorhergehenden Ansprüche, dadurch gekennzeichnet, daß die Dosierflüssigkeit (5) in die Hauptflüssigkeit (1) mittels einer Zufuhrleitung (11, 12) eingeleitet wird, die zumindest an ihrer Austrittsstelle (10) im Hochfrequenzschallbereich, insbesondere im Ultraschallbereich, schwingt.

11. Verfahren nach einem der Ansprüche 1 bis 9, dadurch gekennzeichnet, daß die Dosierflüssigkeit (5) beim Einleiten in die Hauptflüssigkeit (1) gesondert auf eine im Hochfrequenzschallbereich, insbesondere im Ultraschallbereich schwingende Stirnfläche (10) eines Hochfrequenzschwingungserregers (6, 9) aufgebracht wird.

12. Vorrichtung zur Durchführung des Verfahrens nach einem der vorhergehenden Ansprüche,
**dadurch gekennzeichnet,**
daß in der zu behandelnden Hauptflüssigkeit (1) wenigstens die Stirnfläche (10) eines sondenförmigen Hochfrequenzschwingungserregers (6, 9) angeordnet ist, zu der die Dosierflüssigkeit (5) strömt und dort mittels der eingeleiteten Schallwellen in der Hauptflüssigkeit (1) zerstäubt wird.

13. Vorrichtung nach Anspruch 12, dadurch gekennzeichnet, daß die Dosierflüssigkeit (5) der Hauptflüssigkeit (1) über eine zentrale Axialbohrung (11) im Innern des Hochfrequenzschwingungserregers (9) zuströmt und an dessen Stirnfläche (10) in die Hauptflüssigkeit (1) austritt.

14. Vorrichtung nach Anspruch 12, dadurch gekennzeichnet, daß die Dosierflüssigkeit (5) der Hauptflüssigkeit (1) über eine gesonderte Zufuhrleitung (15) zuströmt, die auf die im Hochfrequenzbereich schwingende Stirnfläche (10) des Schwingungserregers (9) gerichtet ist.
